# FASCICULE DE BREVET EUROPEEN

(11) **EP 3 227 981 B1**
(45) Date de publication et mention de la délivrance du brevet: **26.06.2019**
(21) Numéro de dépôt: 15804390.1
(22) Date de dépôt: 01.12.2015
(51) Int. Cl.: E05F 15/40, H02H 7/085

(54) **PROCEDE DE DETECTION D'UN BLOCAGE D'UN ROTOR D'UN MOTEUR ENTRAINANT UN ORGANE D'ACTIONNEMENT**
VERFAHREN ZUR DETEKTION DES BLOCKIEREN EINES ROTORS EINES EIN BETÄTIGUNGSORGAN ANTREIBENDEN MOTORS
DETECTION METHOD OF THE BLOCKING OF A ROTOR OF AN ENGINE MOVING AN ACTUATING MEMBER

(30) Priorité: 01.12.2014 FR 1461690
(43) Date de publication de la demande: 11.10.2017
(73) Titulaire: Safran Electronics & Defense, 92100 Boulogne-Billancourt (FR)
(72) Inventeur: MANSOURI, Badr, 92100 Boulogne-Billancourt (FR); AOUCHICHE, Kamal, 92100 Boulogne-Billancourt (FR)
(74) Mandataire: Decorchemont, Audrey Véronique Christèle
(86) Numéro de dépôt international: PCT/EP2015/078172
(87) Numéro de publication internationale: WO 2016/087424

(56) Documents cités:
- EP-A2- 0 047 812
- DE-A1- 4 401 463
- DE-U1-202005 019 464
- US-A1- 2002 190 680

## Description

L'invention concerne un procédé de détection d'un blocage d'un rotor d'un moteur entraînant un organe d'actionnement.

### ARRIERE-PLAN TECHNOLOGIQUE DE L'INVENTION

Dans un aéronef, différents éléments mobiles tels que les gouvernes ou encore le capot de l'inverseur de poussée sont associés à des organes d'actionnement pour pouvoir être déplacés entre une position neutre et une position active. A cet effet, les organes d'actionnement sont entraînés par un moteur selon un mouvement de translation entre deux butées. A titre d'exemple, dans le cas d'un volet, une première butée est associée à la position neutre de l'élément mobile et une deuxième butée est associée à la position active de l'élément mobile. Dès lors, lorsque le moteur est alimenté, il entraîne les organes d'actionnement qui déplacent à leur tour les éléments mobiles associés. Les documents DE 44 01 463 A1, EP 0 047 812 A2 et DE 20 2005 019464 U1 décrivent des procédés de détection d'un blocage d'un moteur entraînant un organe d'actionnement.

Toutefois, le rotor du moteur est susceptible de subir un blocage mécanique. Malgré ce blocage, la puissance électrique qui est délivrée au moteur demeure identique ce qui entraîne une surchauffe du moteur et notamment de son électronique de puissance. Ceci peut conduire à une dégradation du moteur.

Une solution consisterait à dimensionner l'électronique de puissance du moteur afin qu'elle puisse résister à une surchauffe du fait d'un blocage du rotor. Cependant, ceci entraînerait une augmentation de la masse et de l'encombrement de l'électronique de puissance, ce qui n'est pas souhaitable dans le domaine aéronautique.

Une autre solution consisterait à détecter la surchauffe à l'aide d'un relais thermique. Toutefois, un tel relais présente un temps de réponse relativement long et ne permettrait donc pas de détecter rapidement la surchauffe. L'électronique de puissance pourrait ainsi se retrouver endommagée malgré la présence du relais. Par ailleurs, le relais ne permettrait pas de distinguer un problème de surchauffe dû à un réel blocage du rotor d'un problème de surchauffe dû à une toute autre raison. Une action prise consécutivement à la détection de la surchauffe par le relais ne serait alors pas adaptée.

### OBJET DE L'INVENTION

Un but de l'invention est de proposer un procédé de détection d'un blocage d'un moteur entraînant un organe d'actionnement permettant de détecter plus efficacement le blocage du rotor dudit moteur.

### BREVE DESCRIPTION DE L'INVENTION

En vue de la réalisation de ce but, on propose un procédé de détection d'un blocage d'un rotor d'un moteur entraînant un organe d'actionnement selon un mouvement de translation entre une première butée et une deuxième butée respectivement représentatives d'une première position angulaire et d'une deuxième position angulaire du rotor, le procédé comprenant les étapes comme définies dans la revendication 1.

Grâce à l'observation permanente de paramètres aisément mesurables ou quantifiables, le procédé selon l'invention permet non seulement de détecter rapidement un blocage du rotor mais en outre d'estimer si ce blocage est dû à un grippage ou à une arrivée en butée. En conséquence, il est possible de prendre rapidement des actions différentes selon le type de blocage détecté.

Le procédé selon l'invention permet donc de détecter un blocage du rotor du moteur de façon efficace.

Par ailleurs, le procédé selon l'invention peut être mis en oeuvre par des moyens ne requérant qu'un faible coût de maintenance comparativement à un relais thermique ou à une électronique de puissance surdimensionnée du moteur.

De façon avantageuse, le procédé selon l'invention permet de détecter le blocage d'un moteur entraînant un organe d'actionnement associé à un ou des éléments mobiles soumis à des forces variables dans le temps et dans l'espace (en fonction de la position de l'élément mobile). Par exemple, lorsque l'élément mobile est une partie mobile externe d'un aéronef (capot d'un inverseur de poussée, gouverne, aileron ...), ledit élément mobile est soumis à des charges aérodynamiques variables dans le temps et dans l'espace.

Pour la présente demande, lorsque l'on parle d'une donnée caractéristique de l'organe d'actionnement, comme par exemple la position de l'organe d'actionnement, il peut tout aussi bien s'agir d'une donnée effectivement liée à l'organe d'actionnement, comme la position effective de l'organe d'actionnement, que d'une donnée représentative de l'organe d'actionnement mais liée au rotor, comme la position angulaire effective du rotor qui est représentative de la position effective de l'organe d'actionnement du fait de la liaison entre l'organe d'actionnement et le rotor.

### BREVE DESCRIPTION DES DESSINS

L'invention sera mieux comprise à la lumière de la description qui suit d'un mode de mise en oeuvre particulier non limitatif de l'invention. Il sera fait référence aux figures ci-jointes parmi lesquelles :
- la figure 1 est une vue schématique d'une gouverne, d'un organe d'actionnement et d'un moteur associés à ladite gouverne ainsi que des moyens de commande du moteur permettant de mettre en oeuvre le procédé selon l'invention,
- la figure 2 est une vue schématique d'un module de détection des moyens de commande illustrés à la figure 1,
- la figure 3 est un organigramme illustrant, en relation avec le module de détection illustré à la figure 2, un premier mode de détection d'un blocage d'un rotor du moteur dû à l'arrivée en première butée de l'organe d'actionnement,
- la figure 4 est un organigramme analogue à la figure 3 illustrant un deuxième mode de détection d'un blocage du rotor du moteur dû à l'arrivée en deuxième butée de l'organe d'actionnement,
- la figure 5 est un organigramme analogue à la figure 3 illustrant un troisième mode de détection d'un blocage du rotor du moteur dû à un grippage lors d'un déplacement de l'organe d'actionnement en direction de la première butée,
- la figure 6 est un organigramme analogue à la figure 3 illustrant un quatrième mode de détection d'un blocage du rotor du moteur dû à un grippage lors d'un déplacement de l'organe d'actionnement en direction de la deuxième butée.

### DESCRIPTION DETAILLEE DE L'INVENTION

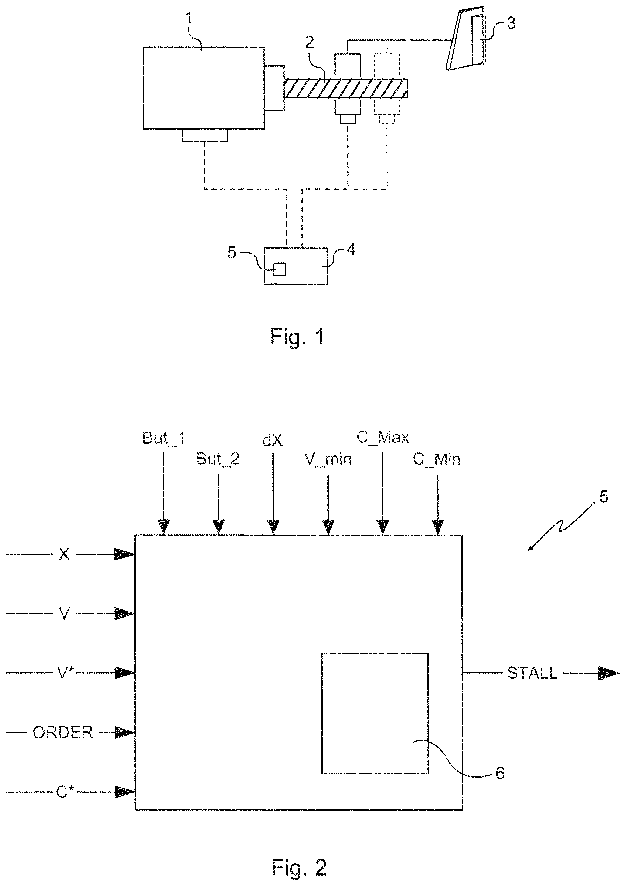

En référence aux figures 1 et 2, le procédé de détection selon l'invention permet ici de détecter un blocage d'un rotor d'un moteur 1 entraînant un organe d'actionnement 2 d'une gouverne 3 d'un aéronef. Cette application n'est bien sûre pas limitative et on pourra mettre en oeuvre le procédé selon l'invention pour la détection d'un blocage d'un rotor d'un moteur entraînant un organe d'actionnement associé à d'autres éléments mobiles comme par exemple au capot d'un inverseur de poussée d'un aéronef.

Le moteur 1 est ici une machine synchrone à aimants permanents.

De façon connue en soi, l'organe d'actionnement 2 est destiné à déplacer la gouverne 3 entre deux positions extrêmes. A cet effet, l'organe d'actionnement 2 est associé au moteur 1 pour être entraîné par ledit moteur 1 selon un mouvement de translation entre une première butée et une deuxième butée de sorte que :
- lorsque l'organe d'actionnement 2 est dans la première butée, la gouverne 3 est dans sa première position extrême, les positions respectives de l'organe d'actionnement 2 et de la gouverne 3 étant alors représentés en traits pleins, et
- lorsque l'organe d'actionnement 2 est dans la deuxième butée, la gouverne 3 est dans sa deuxième position extrême, les positions respectives de l'organe d'actionnement 2 et de la gouverne 3 étant alors représentés en pointillés.

La première butée et la deuxième butée sont respectivement représentatives d'une première position angulaire et d'une deuxième position angulaire du rotor du moteur 1.

De la sorte, lorsque le moteur 1 est alimenté, il entraîne l'organe d'actionnement 2 qui déplace à son tour la gouverne 3.

Par ailleurs, le moteur 1 est associé à des moyens de commande 4 du moteur 1. Afin de détecter un blocage du rotor, lors d'un déplacement angulaire du rotor, les moyens de commande 4 comportent un module de détection 5 d'un blocage du rotor.

A cet effet, tout le long d'un déplacement angulaire du rotor, le module de détection 5 reçoit, des moyens de commande 4, les données suivantes : position X de l'organe d'actionnement 2 relativement aux deux butées, sens de déplacement de l'organe d'actionnement 2 relativement auxdites butées et vitesse de déplacement V de l'organe d'actionnement 2. La position X de l'organe d'actionnement 2 et la vitesse de déplacement V de l'organe d'actionnement 2 sont par exemple mesurées par des capteurs reliés aux moyens de commande 4. En variante, la position X de l'organe d'actionnement 2 et la vitesse de déplacement V de l'organe d'actionnement 2 sont déduites de données correspondantes liées au moteur, ces données étant par exemple fournies par un résolveur des moyens de commande 4.

L'information concernant le sens de déplacement de l'organe d'actionnement 2 est ici transmise au module de détection 5 par l'intermédiaire d'une variable ORDER prenant la valeur GO lorsque l'organe d'actionnement 2 se déplace en direction de la deuxième butée et prenant la valeur BACK lorsque l'organe d'actionnement 2 se déplace en direction de la première butée. La modification de la valeur de la variable ORDER est effectuée par les moyens de commande 4 selon les consignes transmises au moteur 1.

De façon particulière, tout le long d'un déplacement angulaire du rotor, le module de détection 5 reçoit également la donnée de consigne de vitesse de déplacement V* de l'organe d'actionnement qui lui est transmise par les moyens de commande 4.

En outre, selon l'invention tout le long d'un déplacement angulaire du rotor, le module de détection 5 reçoit ici la donnée de consigne de couple mécanique C* à fournir à l'organe d'actionnement 2 qui lui est transmise par les moyens de commande 4.

Par ailleurs, la position de la première butée But_1 et la position de la deuxième butée But_2 sont enregistrées dans le module de détection 5. Ici, la position de la première butée But_1 correspond à zéro et la position de la deuxième butée But_2 correspond à une valeur positive différente de zéro.

De plus, un seuil de vitesse de déplacement minimale V_min de l'organe d'actionnement 2 est ici enregistré dans le module de détection 5. En effet, si l'organe d'actionnement 2 se déplace trop lentement, ceci peut entraîner une surchauffe du moteur 1, ce qui risque de l'endommager. Ledit seuil de vitesse de déplacement minimale V_min est donc prédéterminé de sorte à éviter une élévation de température trop importante du moteur 1.

De la même façon, un seuil de couple mécanique maximal C_max à fournir à l'organe d'actionnement 2 est ici enregistré dans le module de détection 5. Par ailleurs, un seuil de couple mécanique minimal C_min à fournir à l'organe d'actionnement 2 est aussi enregistré dans le module de détection 5. En effet, on rappelle que l'organe d'actionnement 2 est mobile de façon réversible entre deux butées. La consigne de couple mécanique est donc positive lorsque l'organe d'actionnement 2 se déplace en direction de la deuxième butée, et doit ainsi être inférieure à C_max, et est négative lorsque l'organe d'actionnement 2 se déplace en direction de la première butée et doit ainsi être supérieure à C_min (de valeur négative).

Ces seuils de couple mécanique sont prédéterminés afin d'éviter des dommages mécaniques au niveau du moteur 1 ou de l'organe d'actionnement 2 du fait, par exemple, d'une trop grande sollicitation dudit moteur 1 ou de l'organe d'actionnement 2.

En outre, un delta de position dX est enregistré dans le module de détection 5. Ce delta de position dX définit une erreur de position sur la position X de l'organe d'actionnement 2 et est prédéterminé de sorte à prendre notamment en considération une imprécision sur la mesure de la position dX par le capteur.

Ces données de position X, du sens de déplacement ORDER, de la vitesse de déplacement V, de la consigne de vitesse de déplacement V*, de la consigne du couple mécanique C*, de la position de la première butée But_1, de la position de la deuxième butée But_2 ainsi que les valeurs de seuil de vitesse de déplacement minimale V_min, de seuil de couple mécanique maximal C_max, de seuil de couple mécanique minimal C_min et de delta de position dX permettent au module de détection 5 de détecter un blocage du rotor et de déterminer en outre si le blocage est dû à une arrivée de l'organe d'actionnement 2 en butée ou à un grippage du moteur 1 ou de l'organe d'actionnement 2. Plus précisément le module de détection 5 est configuré pour déterminer si le blocage est dû à l'arrivée en première butée de l'organe d'actionnement 2, ou est dû à l'arrivée en deuxième butée de l'organe d'actionnement 2, ou est dû à un grippage lors d'un déplacement de l'organe d'actionnement 2 en direction de la première butée, ou est dû à un grippage lors d'un déplacement de l'organe d'actionnement 2 en direction de la deuxième butée.

Selon un mode de mise en oeuvre particulier, le module de détection 5 comporte des moyens d'indexage 6 générant une variable STALL à destination des moyens de commande 4 en faisant prendre une valeur particulière à ladite variable STALL selon le type de blocage détecté comme décrit ci-dessous.

Lors d'un déplacement angulaire du rotor, tant qu'un blocage n'a pas été détecté, les moyens d'indexage 6 maintiennent la variable STALL à 0.

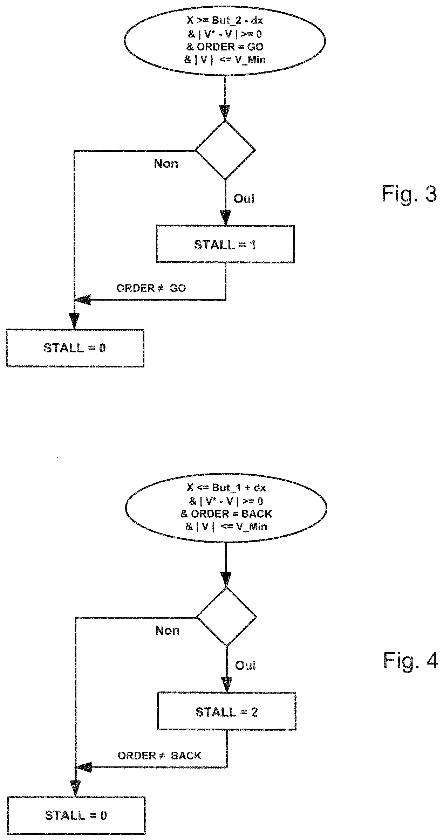

En référence à la figure 3, le module de détection 5 détecte un blocage du rotor dû à l'arrivée en deuxième butée de l'organe d'actionnement 2 :
- si la position de l'organe d'actionnement 2 est sensiblement supérieure ou égale à la position de la deuxième butée But_2, c'est-à-dire ici si la position X de l'organe d'actionnement 2 est supérieure ou égale à la position de la deuxième butée But_2 moins le delta de position dX, et
- si une valeur absolue de la différence entre la consigne de vitesse de déplacement V* et la vitesse de déplacement V est supérieure ou égale à zéro, et
- si la valeur absolue de la vitesse de déplacement V est inférieure ou égale au seuil de vitesse de déplacement minimale V_min, et
- si l'ordre de déplacement de l'organe d'actionnement en direction de la deuxième butée est actif c'est-à-dire si la variable ORDER est égale à GO.

Dans ce cas, les moyens d'indexage 6 incrémentent la valeur de la variable STALL de sorte que la variable STALL soit à 1.

Tant que l'ordre de déplacement en direction de la deuxième butée est actif, c'est-à-dire que la variable ORDER est égale à GO, la variable STALL demeure à 1.

Lorsque l'ordre de déplacement en direction de la deuxième butée n'est plus actif, c'est-à-dire si la variable ORDER est différente de GO, les moyens d'indexage 6 modifient la valeur de la variable STALL pour que celle-ci soit de nouveau à 0. Le module de détection 5 est ainsi prêt à détecter un nouveau blocage du rotor.

En référence à la figure 4, le module de détection 5 détecte un blocage du rotor dû à l'arrivée en première butée de l'organe d'actionnement 2 :
- si la position de l'organe d'actionnement 2 est sensiblement inférieure ou égale à la position de la première butée But_1, c'est-à-dire ici si la position de l'organe d'actionnement 2 est inférieure ou égale à la position de la première butée But_1 plus le delta de position dX, et
- si une valeur absolue de la différence entre la consigne de vitesse de déplacement V* et la vitesse de déplacement V est supérieure ou égale à zéro, et
- si la valeur absolue de la vitesse de déplacement V est inférieure ou égale au seuil de vitesse de déplacement minimale V_min, et
- si un ordre de déplacement de l'organe d'actionnement 2 en direction de la première butée est actif c'est-à-dire si la variable ORDER est égale à BACK.

Dans ce cas, les moyens d'indexage 6 incrémentent la valeur de la variable STALL de sorte que la variable STALL soit à 2.

Tant que l'ordre de déplacement en direction de la première butée est actif, c'est-à-dire que la variable ORDER est égale à BACK, la variable STALL demeure à 2.

Lorsque l'ordre de déplacement en direction de la première butée n'est plus actif, c'est-à-dire lorsque la variable ORDER n'est plus égale à BACK, les moyens d'indexage 6 modifient la valeur de la variable STALL pour que celle-ci soit de nouveau à 0. Le module de détection 5 est ainsi prêt à détecter un nouveau blocage du rotor.

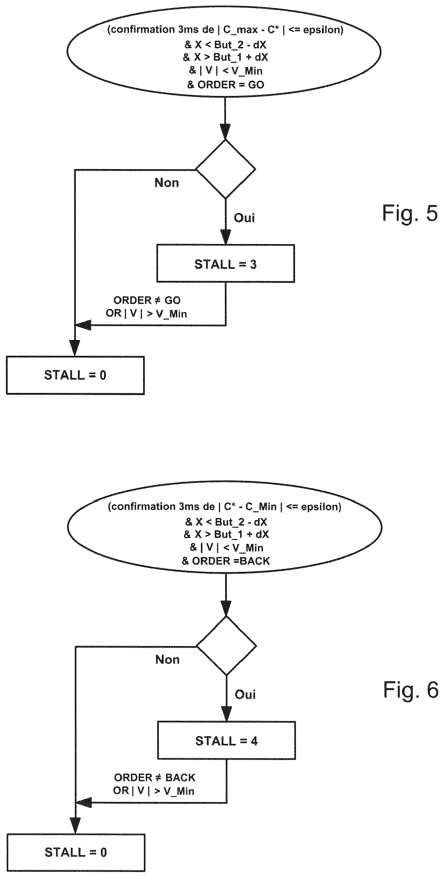

En référence à la figure 5, le module de détection 5 détecte un blocage du rotor dû à un grippage lors d'un déplacement de l'organe d'actionnement 2 en direction de la deuxième butée :
- si une valeur absolue de la différence entre le seuil de couple maximal C_max et la consigne de couple C* est sensiblement nulle depuis au moins un intervalle de temps donné, par exemple ici depuis au moins un intervalle de temps de 3 millisecondes,
- si la position X est sensiblement inférieure à la position de la deuxième butée But_2 et sensiblement supérieure à la position de la première butée But_1, c'est-à-dire ici si la position X est inférieure à la position de la deuxième butée But_2 moins le delta de position dX et supérieure à la position de la première butée But_1 plus le delta de position dX, et
- si une valeur absolue de la vitesse de déplacement V est inférieure au seuil de vitesse de déplacement minimale V_min, et
- si un ordre de déplacement de l'organe d'actionnement 2 vers la deuxième butée est actif c'est-à-dire si la variable ORDER est égale à GO.

Dans ce cas, les moyens d'indexage 6 incrémentent la valeur de la variable STALL de sorte que la variable STALL soit à 3.

Tant que l'ordre de déplacement en direction de la deuxième butée est actif, c'est-à-dire que la variable ORDER est égale à GO, et que la valeur absolue de la vitesse de déplacement V demeure inférieure au seuil de vitesse de déplacement minimale V_min, la variable STALL demeure à 3.

Lorsque l'ordre de déplacement en direction de la deuxième butée n'est plus actif, c'est-à-dire lorsque la variable ORDER n'est plus égale à GO, les moyens d'indexage 6 modifient la valeur de la variable STALL pour que celle-ci soit de nouveau à 0. Par ailleurs, lorsque la valeur absolue de la vitesse de déplacement V devient supérieure au seuil de vitesse de déplacement minimale V_min, les moyens d'indexage 6 modifient la valeur de la variable STALL pour que celle-ci soit de nouveau à 0.

Dans les deux cas, le module de détection 5 est prêt à détecter un nouveau blocage du rotor.

Enfin, en référence à la figure 6, le module de détection 5 détecte un blocage du rotor dû à un grippage lors d'un déplacement de l'organe d'actionnement 2 en direction de la première butée :
- si une valeur absolue de la différence entre le seuil de couple minimal C_min et la consigne de couple C* est sensiblement nulle depuis au moins l'intervalle de temps donné, qui est ici de 3 millisecondes, et
- si la position X est sensiblement inférieure à la position de la deuxième butée But_2 et sensiblement supérieure à la position de la première butée But_1, c'est-à-dire ici si la position X est inférieure à la position de la deuxième butée But_2 moins le delta de position dX et supérieure à la position de la première butée But_1 plus le delta de position, et
- si une valeur absolue de la vitesse de déplacement V est inférieure au seuil de vitesse de déplacement minimale V_min, et
- si un ordre de déplacement de l'organe d'actionnement vers la première butée est actif c'est-à-dire si la variable ORDER est égale à BACK.

Dans ce cas, les moyens d'indexage 6 incrémentent la valeur de la variable STALL de sorte que la variable STALL soit à 4.

Tant que l'ordre de déplacement en direction de la première butée est actif, c'est-à-dire que la variable ORDER est égale à BACK, et que la valeur absolue de la vitesse de déplacement V demeure inférieure au seuil de vitesse de déplacement minimale V_min, la variable STALL demeure à 4.

Lorsque l'ordre de déplacement en direction de la première butée n'est plus actif, c'est-à-dire lorsque la variable ORDER n'est plus égale à BACK, les moyens d'indexage 6 modifient la valeur de la variable STALL pour que celle-ci soit de nouveau à 0. Par ailleurs, lorsque la valeur absolue de la vitesse de déplacement V est supérieure au seuil de vitesse de déplacement minimale V_min, les moyens d'indexage 6 modifient la valeur de la variable STALL pour que celle-ci soit de nouveau à 0.

Dans les deux cas, le module de détection 5 est de nouveau prêt à détecter un nouveau blocage du rotor.

De la sorte, à partir de simples données aisément déterminables ou mesurables, le module de détection 5 permet rapidement et efficacement de déceler un blocage et la cause même de ce blocage.

De façon avantageuse, les moyens d'indexage 6 permettent d'indiquer de façon claire et rapide aux moyens de commande 4 le type de blocage décelé. Il est alors possible pour les moyens de commande 4 d'agir en conséquence selon la valeur que prend la variable STALL.

Selon un mode de mise en oeuvre particulier, les moyens de commande 4 sont ainsi agencés pour agir lorsqu'il a été détecté que le rotor s'est bloqué par arrivée en première butée ou en deuxième butée de l'organe d'actionnement 2, c'est-à-dire lorsque la variable STALL générée par les moyens d'indexage est égale à 1 ou 2.

De préférence, lorsque la variable STALL est à 1 ou 2, les moyens de commande 4 contrôlent le moteur 1 de sorte à entraîner un freinage fictif de l'organe d'actionnement 2.

De façon particulière, les moyens de commande 4 abaissent ici la valeur du seuil de couple maximal C_max lorsque la variable STALL est à 1. Le seuil de couple maximal C_max est ici réduit de sorte que le moteur 1 permette malgré tout de maintenir en position extrême la gouverne 3 par l'organe d'actionnement 2 en s'opposant notamment aux efforts aérodynamiques.

Du fait de cette réduction du couple maximal C_max transmissible à l'organe d'actionnement 2, le moteur 1 est alimenté par un plus faible courant. De la sorte, quand bien même l'organe d'actionnement 2 demeure en butée pendant un laps de temps relativement long, il n'y a pas de surchauffe excessive du moteur 1.

De même, les moyens de commande 4 augmentent ici la valeur du seuil de couple minimal C_min (de valeur négative) lorsque la variable STALL est à 2. Le seuil de couple minimal C_min est ici augmenté de sorte que le moteur 1 permette malgré tout de maintenir en position extrême la gouverne 3 par l'organe d'actionnement 2 en s'opposant notamment aux efforts aérodynamiques. Selon un mode de mise en oeuvre particulier, les moyens de commande 4 sont également agencés pour agir lorsqu'il a été détecté que le rotor s'est bloqué à cause d'un grippage, c'est-à-dire lorsque la variable STALL générée par les moyens d'indexage 6 est égale à 3 ou 4.

De façon particulière, lorsque la variable STALL est à 3 ou 4, les moyens de commande 4 contrôlent le moteur 1 pour requérir des déplacements angulaires du rotor de petites amplitudes successivement dans un sens de rotation puis dans l'autre sens de rotation, correspondant à une commande de mouvements successifs d'avance et de recul de l'organe d'actionnement 2 de faibles amplitudes, afin de provoquer un dégrippage du moteur 1 et/ou de l'organe d'actionnement 2.

Bien entendu l'invention n'est pas limitée au mode de mise en oeuvre décrit et on peut y apporter des variantes de réalisation sans sortir du cadre de l'invention.

En particulier, bien qu'ici on utilise directement les mesures de déplacement et de position de l'organe d'actionnement pour détecter le blocage, on pourra avoir recours à des modèles représentatifs du mouvement de l'organe d'actionnement pour détecter le blocage. Par exemple le modèle pourra modéliser le mouvement angulaire du rotor entre sa première position angulaire et sa deuxième position angulaire par un mouvement de translation d'un corps de même inertie que le rotor entre deux butées, chaque butée étant représentative des butées de l'organe d'actionnement. Les modèles pourront également être utilisés pour déterminer les seuils utilisés par le procédé de l'invention tels que le seuil de vitesse minimale. Bien qu'ici on utilise des données liées à l'organe d'actionnement, on pourra mettre en oeuvre le procédé selon l'invention à l'aide de données liées au rotor et représentatives de données liées à l'organe d'actionnement. Encore une fois, pour la présente demande, lorsque l'on parle d'une donnée caractéristique de l'organe d'actionnement, telle que la consigne de couple mécanique à transmettre à l'organe d'actionnement, il peut tout aussi bien s'agir d'une donnée liée à l'organe d'actionnement, à savoir une réelle consigne de couple mécanique à transmettre à l'organe d'actionnement, que d'une donnée représentative de l'organe d'actionnement mais liée au rotor, comme une consigne de couple électromagnétique à fournir au rotor et représentative de la consigne de couple mécanique à transmettre à l'organe d'actionnement. Ainsi, les données liées au moteur et représentatives des données liées à l'organe d'actionnement pourront être fournies par un résolveur du moteur.

Bien qu'ici on contrôle le moteur pour requérir des déplacements angulaires du rotor de petites amplitudes successivement dans un sens de rotation puis dans l'autre sens de rotation pour chercher à débloquer le rotor en cas de grippage, on pourra en variante ou en complément, contrôler autrement le moteur pour tenter de débloquer le rotor en cas de grippage. Par exemple, on pourra augmenter pendant un intervalle de temps prédéterminé, par exemple de 3 millisecondes, le seuil de couple mécanique maximal à transmettre à l'organe d'actionnement (respectivement diminuer pendant un intervalle de temps prédéterminé, par exemple de 3 millisecondes, le seuil de couple mécanique minimal à transmettre à l'organe d'actionnement, seuil qui est négatif). On pourra également couper une alimentation électrique du moteur pour éviter un endommagement du moteur et/ou de l'organe d'actionnement du fait du grippage. Par exemple, si ni la commande de faibles mouvements de rotation du rotor successivement dans les deux sens de rotation, ni l'augmentation temporaire du couple maximal ne permet un déblocage du rotor, alors on commandera le moteur pour couper son alimentation électrique.

Bien qu'ici il n'y ait qu'un unique seuil de vitesse de déplacement minimale, il pourra y avoir deux seuils de vitesse de déplacement minimale, notamment bien que non exclusivement en cas de modification des seuils de couple maximal et minimal lorsque l'organe d'actionnement est en butée ou à proximité des butées : un premier seuil de vitesse de déplacement minimale pour lorsque l'organe d'actionnement se déplace en direction de l'une ou l'autre de ses butées et un deuxième seuil de vitesse de déplacement minimale pour lorsque l'organe d'actionnement est en butée ou à proximité des butées. Le premier seuil sera alors utilisé pour la détection d'un blocage du rotor dû à un grippage et le deuxième seuil pour la détection d'un blocage du rotor dû à l'arrivée en butée de l'organe d'actionnement.

Bien qu'ici les valeurs de seuils de couple soient modifiées uniquement lorsque l'organe d'actionnement est en butée, lesdits valeurs pourront être modifiées tout au long du déplacement de l'organe d'actionnement afin de freiner progressivement ledit déplacement à l'approche des butées.

## Revendications

1. Procédé de détection d'un blocage d'un rotor d'un moteur (1) entraînant un organe d'actionnement (2) selon un mouvement de translation entre une première butée et une deuxième butée respectivement représentatives d'une première position angulaire et d'une deuxième position angulaire du rotor, le procédé comprenant les étapes de :
- lors d'une première étape, au cours d'un déplacement angulaire du rotor, estimer au moins une position (X) de l'organe d'actionnement relativement aux deux butées, un sens de déplacement de l'organe d'actionnement relativement auxdites butées ainsi qu'une vitesse de déplacement (V) de l'organe d'actionnement,
- lors d'une deuxième étape, détecter au moins à partir de l'estimation de la position (X) de l'organe d'actionnement, du sens de déplacement de l'organe d'actionnement et de la vitesse de déplacement (V) de l'organe d'actionnement :
un blocage du rotor dû à l'arrivée en première butée de l'organe d'actionnement, ou
un blocage du rotor dû à l'arrivée en deuxième butée de l'organe d'actionnement, ou
un blocage du rotor dû à un grippage lors d'un déplacement de l'organe d'actionnement en direction de la première butée, ou
un blocage du rotor dû à un grippage lors d'un déplacement de l'organe d'actionnement en direction de la deuxième butée,
la deuxième étape étant mise en oeuvre à partir de la donnée de consigne de couple mécanique (C*) à fournir à l'organe d'actionnement, ladite consigne étant positive et devant être inférieure à un seuil de couple maximal (C_max) lorsque l'organe d'actionnement se déplace en direction d'une des butées et ladite consigne étant négative et devant être supérieure à un seuil de couple mécanique minimal (C_min) lorsque l'organe d'actionnement se déplace en direction de l'autre des butées, les seuils de couple mécanique étant prédéterminés afin d'éviter des dommages mécaniques au niveau du moteur ou de l'organe d'actionnement.

2. Procédé selon la revendication 1, dans lequel on détecte un blocage du rotor dû à l'arrivée en deuxième butée de l'organe d'actionnement (2) :
- si la position (X) de l'organe d'actionnement est sensiblement supérieure ou égale à la position de la deuxième butée (But_2), et
- si une valeur absolue de la différence entre une consigne de vitesse de déplacement (V*) de l'organe d'actionnement et la vitesse de déplacement (V) de l'organe d'actionnement est supérieure ou égale à zéro, et
- si la valeur absolue de la vitesse de déplacement (V) de l'organe d'actionnement est inférieure ou égale à un seuil de vitesse de déplacement minimale prédéterminé (V_min), et
- si un ordre de déplacement de l'organe d'actionnement en direction de la deuxième butée est actif, ordre représentatif d'un sens de déplacement de l'organe d'actionnement.

3. Procédé selon la revendication 1, dans lequel on détecte un blocage du rotor dû à l'arrivée en première butée de l'organe d'actionnement (2):
- si la position (X) de l'organe d'actionnement est sensiblement inférieure ou égale à la position de la première butée, et
- si une valeur absolue de la différence entre une consigne de vitesse de déplacement (V*) de l'organe d'actionnement et la vitesse de déplacement (V) de l'organe d'actionnement est supérieure ou égale à zéro, et
- si la valeur absolue de la vitesse de déplacement (V) de l'organe d'actionnement est inférieure ou égale à un seuil de vitesse de déplacement minimale prédéterminé (V_min), et
- si un ordre de déplacement de l'organe d'actionnement en direction de la première butée est actif, ordre représentatif d'un sens de déplacement de l'organe d'actionnement.

4. Procédé selon la revendication 1, dans lequel on détecte un blocage du rotor dû à un grippage lors d'un déplacement de l'organe d'actionnement (2) en direction de la deuxième butée :
- si la position (X) de l'organe d'actionnement est sensiblement inférieure à la position de la deuxième butée (But_2) et sensiblement supérieure à la position de la première butée (But_1), et
- si une valeur absolue de la vitesse de déplacement (V) de l'organe d'actionnement est inférieure à un seuil de vitesse de déplacement minimale prédéterminé (V_min), et
- si une valeur absolue de la différence entre le seuil de couple maximal prédéterminé (C_max) et une consigne de couple (C*) à transmettre à l'organe d'actionnement est sensiblement nulle depuis au moins un intervalle de temps prédéterminé, et
- si un ordre de déplacement de l'organe d'actionnement vers la deuxième butée est actif, ordre représentatif d'un sens de déplacement de l'organe d'actionnement.

5. Procédé selon la revendication 1, dans lequel on détecte un blocage du rotor dû à un grippage lors d'un déplacement de l'organe d'actionnement (2) en direction de la première butée :
- si la position (X) de l'organe d'actionnement est sensiblement inférieure à la position de la deuxième butée et sensiblement supérieure à la position de la première butée, et
- si une valeur absolue de la vitesse de déplacement de l'organe d'actionnement est inférieure à un seuil de vitesse de déplacement minimale prédéterminé (V_min), et
- si une valeur absolue de la différence entre le seuil de couple minimal prédéterminé (C_min) et une consigne de couple (C*) à transmettre à l'organe d'actionnement est sensiblement nulle depuis au moins un intervalle de temps prédéterminé, le seuil de couple minimal prédéterminé étant de valeur négative, et
- si un ordre de déplacement de l'organe d'actionnement vers la première butée est actif, ordre représentatif d'un sens de déplacement de l'organe d'actionnement.

6. Procédé selon la revendication 1, comportant en outre une étape de déblocage du rotor lorsqu'il a été détecté que le blocage est dû à un grippage.

7. Procédé selon la revendication 6, dans lequel au cours de l'étape de déblocage du rotor, on commande des mouvements de déplacements angulaires du rotor de petites amplitudes successivement dans un sens de rotation puis dans l'autre sens de rotation du rotor.

8. Procédé selon la revendication 6, dans lequel au cours de l'étape de déblocage du rotor, on augmente pendant un intervalle de temps prédéterminé un seuil de couple mécanique maximal (C_max) à transmettre à l'organe d'actionnement (2) respectivement on diminue pendent une intervalle de temps prédéterminé le seuil de couple mécanique minimal (C_min) à transmettre à l'organe d'actionnement (2), le seuil de couple minimal prédéterminé étant de valeur négative.

9. Procédé selon la revendication 6, dans lequel au cours de l'étape de déblocage du rotor, on coupe une alimentation du moteur (1).

10. Procédé selon la revendication 1, comportant en outre une étape de freinage fictif de l'organe d'actionnement (2) lorsqu'il a été détecté un blocage dû à l'arrivée en butée de l'organe d'actionnement.

11. Procédé selon la revendication 10, dans lequel on commande un abaissement du seuil de couple mécanique maximal (C_max), de valeur positive, à transmettre à l'organe d'actionnement (2) lorsqu'il a été détecté un blocage dû à l'arrivée en butée de l'organe d'actionnement.

12. Procédé selon la revendication 10, dans lequel on commande une augmentation du seuil de couple mécanique minimal (C_min), de valeur négative, à transmettre à l'organe d'actionnement (2) lorsqu'il a été détecté un blocage dû à l'arrivée en butée de l'organe d'actionnement.

## Patentansprüche

1. Verfahren zum Erfassen eines Blockierens eines Rotors eines Motors (1), der ein Betätigungsorgan (2) gemäß einer Translationsbewegung zwischen einem ersten Anschlag und einem zweiten Anschlag antreibt, die repräsentativ für eine erste Winkelposition bzw. eine zweite Winkelposition des Rotors sind, wobei das Verfahren die Schritte umfasst:
- während eines ersten Schrittes im Verlauf einer Winkelverschiebung des Rotors Schätzen mindestens einer Position (X) des Betätigungsorgans relativ zu den beiden Anschlägen, einer Verschiebungsrichtung des Betätigungsorgans relativ zu den genannten Anschlägen sowie einer Verschiebungsgeschwindigkeit (V) des Betätigungsorgans,
- während eines zweiten Schrittes Erfassen zumindest anhand der Schätzung der Position (X) des Betätigungsorgans, der Verschiebungsrichtung des Betätigungsorgans und der Verschiebungsgeschwindigkeit (V) des Betätigungsorgans:
eines Blockierens des Rotors aufgrund des Ankommens des Betätigungsorgans am ersten Anschlag, oder
eines Blockierens des Rotors aufgrund des Ankommens des Betätigungsorgans am zweiten Anschlag, oder
eines Blockierens des Rotors aufgrund eines Festfressens während einer Verschiebung des Betätigungsorgans in Richtung des ersten Anschlags, oder
eines Blockierens des Rotors aufgrund eines Festfressens während einer Verschiebung des Betätigungsorgans in Richtung des zweiten Anschlags, wobei der zweite Schritt anhand der dem Betätigungsorgan zu liefernden Sollwertgröße (C*) für das mechanische Drehmoment durchgeführt wird, wobei der genannte Sollwert positiv ist und kleiner als ein maximaler Drehmomentschwellwert (C_max) sein muss, wenn sich das Betätigungsorgan in Richtung eines der Anschläge verschiebt, und der genannte Sollwert negativ ist und größer als ein minimaler Schwellwert (C_min) für das mechanische Drehmoment sein muss, wenn sich das Betätigungsorgan in Richtung des anderen der Anschläge verschiebt, wobei die Schwellwerte für das mechanische Drehmoment vorbestimmt sind, um mechanische Schäden im Bereich des Motors oder des Betätigungsorgans zu vermeiden.

2. Verfahren nach Anspruch 1, bei dem man ein Blockieren des Rotors aufgrund des Ankommens des Betätigungsorgans (2) an dem zweiten Anschlag erfasst:
- wenn die Position (X) des Betätigungsorgans im Wesentlichen größer oder gleich der Position des zweiten Anschlags (But_2) ist, und
- wenn ein Absolutwert des Unterschieds zwischen einem Verschiebungsgeschwindigkeitssollwert (V*) des Betätigungsorgans und der Verschiebungsgeschwindigkeit (V) des Betätigungsorgans größer oder gleich Null ist, und
- wenn der Absolutwert der Verschiebungsgeschwindigkeit (V) des Betätigungsorgans kleiner oder gleich einem vorbestimmten minimalen Verschiebungsgeschwindigkeitsschwellwert (V_min) ist, und
- wenn ein Befehl zur Verschiebung des Betätigungsorgans in Richtung des zweiten Anschlags aktiv ist, wobei der Befehl repräsentativ für eine Verschiebungsrichtung des Betätigungsorgans ist.

3. Verfahren nach Anspruch 1, bei dem man ein Blockieren des Rotors aufgrund des Ankommens des Betätigungsorgans (2) an dem ersten Anschlag erfasst:
- wenn die Position (X) des Betätigungsorgans im Wesentlichen kleiner oder gleich der Position des ersten Anschlags ist, und
- wenn ein Absolutwert des Unterschieds zwischen einem Verschiebungsgeschwindigkeitssollwert (V*) des Betätigungsorgans und der Verschiebungsgeschwindigkeit (V) des Betätigungsorgans größer oder gleich Null ist, und
- wenn der Absolutwert der Verschiebungsgeschwindigkeit (V) des Betätigungsorgans kleiner oder gleich einem vorbestimmten minimalen Verschiebungsgeschwindigkeitsschwellwert (V_min) ist, und
- wenn ein Befehl zur Verschiebung des Betätigungsorgans in Richtung des ersten Anschlags aktiv ist, wobei der Befehl repräsentativ für eine Verschiebungsrichtung des Betätigungsorgans ist.

4. Verfahren nach Anspruch 1, bei dem man ein Blockieren des Rotors aufgrund eines Festfressens während einer Verschiebung des Betätigungsorgans (2) in Richtung des zweiten Anschlags erfasst:
- wenn die Position (X) des Betätigungsorgans im Wesentlichen kleiner als die Position des zweiten Anschlags (But_2) und im Wesentlichen größer als die Position des ersten Anschlags (But_1) ist, und
- wenn ein Absolutwert der Verschiebungsgeschwindigkeit (V) des Betätigungsorgans kleiner als ein vorbestimmter minimaler Verschiebungsgeschwindigkeitsschwellwert (V_min) ist, und
- wenn ein Absolutwert des Unterschieds zwischen dem vorbestimmten maximalen Drehmomentschwellwert (C_max) und einem an das Betätigungsorgan zu übertragenden Drehmomentsollwert (C*) für mindestens ein vorbestimmtes Zeitintervall im Wesentlichen Null ist, und
wenn ein Befehl zur Verschiebung des Betätigungsorgans in Richtung des zweiten Anschlags aktiv ist, wobei der Befehl repräsentativ für eine Verschiebungsrichtung des Betätigungsorgans ist.

5. Verfahren nach Anspruch 1, bei dem man ein Blockieren des Rotors aufgrund eines Festfressens während einer Verschiebung des Betätigungsorgans (2) in Richtung des ersten Anschlags erfasst:
- wenn die Position (X) des Betätigungsorgans im Wesentlichen kleiner als die Position des zweiten Anschlags und im Wesentlichen größer als die Position des ersten Anschlags ist, und
- wenn ein Absolutwert der Verschiebungsgeschwindigkeit des Betätigungsorgans kleiner als ein vorbestimmter minimaler Verschiebungsgeschwindigkeitsschwellwert (V_min) ist, und
- wenn ein Absolutwert des Unterschieds zwischen dem vorbestimmten minimalen Drehmomentschwellwert (C_min) und einem an das Betätigungsorgan zu übertragenden Drehmomentsollwert (C*) für mindestens ein vorbestimmtes Zeitintervall im Wesentlichen Null ist, wobei der vorbestimmte minimale Drehmomentschwellwert ein negativer Wert ist, und
- wenn ein Befehl zur Verschiebung des Betätigungsorgans in Richtung des ersten Anschlags aktiv ist, wobei der Befehl repräsentativ für eine Verschiebungsrichtung des Betätigungsorgans ist.

6. Verfahren nach Anspruch 1, ferner umfassend einen Schritt des Freigebens des Rotors, wenn erfasst wurde, dass das Blockieren aufgrund eines Festfressens erfolgte.

7. Verfahren nach Anspruch 6, bei dem man während des Schrittes des Freigebens des Rotors Winkelverschiebungsbewegungen des Rotors mit kleinen Amplituden nacheinander in eine Drehrichtung und dann in die andere Drehrichtung des Rotors steuert.

8. Verfahren nach Anspruch 6, bei dem man während des Schrittes des Freigebens des Rotors für ein vorbestimmtes Zeitintervall einen zum Betätigungsorgan (2) zu übertragenden maximalen Schwellwert (C_max) für das mechanische Drehmoment erhöht bzw. man für ein vorbestimmtes Zeitintervall den zum Betätigungsorgan (2) zu übertragenden minimalen Schwellwert (C_min) für das mechanische Drehmoment verringert, wobei der vorbestimmte minimale Drehmomentschwellwert ein negativer Wert ist.

9. Verfahren nach Anspruch 6, bei dem man während des Schrittes des Freigebens des Rotors eine Versorgung des Motors (1) unterbricht.

10. Verfahren nach Anspruch 1, ferner umfassend einen Schritt eines fiktiven Bremsens des Betätigungsorgans (2), wenn ein Blockieren aufgrund des Ankommens des Betätigungsorgans am Anschlag erfasst wurde.

11. Verfahren nach Anspruch 10, bei dem man ein Senken des zum Betätigungsorgan zu übertragenden maximalen Schwellwerts (C_max) für das mechanische Drehmoment mit positivem Wert steuert, wenn ein Blockieren aufgrund eines Ankommens des Betätigungsorgans am Anschlag erfasst wurde.

12. Verfahren nach Anspruch 10, bei dem man ein Erhöhen des minimalen Schwellwerts (C_min) für das mechanische Drehmoment mit negativem Wert steuert, wenn ein Blockieren aufgrund eines Ankommens des Betätigungsorgans am Anschlag erfasst wurde.

## Claims

1. A method of detecting blocking of a rotor of a motor (1) driving an actuator member (2) to move in translation between first and second abutments that are respectively representative of first and second angular positions of the rotor, the method comprising the steps of:
• in a first step, during angular movement of the rotor, estimating at least a position (X) of the actuator member relative to the two abutments, a travel direction of the actuator member relative to the two abutments, and also a travel speed (V) of the actuator member;
• in a second step, on the basis at least of the estimated position (X) of the actuator member, of the estimated travel direction of the actuator member, and of the estimated travel speed (V) of the actuator member, detecting:
• blocking of the rotor due to the actuator member reaching the first abutment; or
• blocking of the rotor due to the actuator member reaching the second abutment; or
• blocking of the rotor due to seizing during travel of the actuator member towards the first abutment; or
• blocking of the rotor due to seizing during travel of the actuator member towards the second abutment,
wherein the second step is implemented with the help of the setpoint data (C*) for the mechanical torque to be delivered, said mechanical torque setpoint being positive and must be less than a mechanical torque threshold (C_max) when the actuator member is moving towards one of the abutments and said mechanical torque setpoint being negative and must be greater than a mechanical torque threshold (C_min) when the actuator member is moving towards the other of the abutments, the mechanical torque thresholds being predetermined so as to avoid mechanical damage to the motor or the actuator member.

2. A method according to claim 1, wherein blocking of the rotor due to the actuator member (2) reaching the second abutment is detected:
• if the position (X) of the actuator member is substantially greater than or equal to the position of the second abutment (But_2); and
• if an absolute value of the difference between a travel speed setpoint (V*) for the actuator member and the travel speed (V) of the actuator member is greater than or equal to zero; and
• if the absolute value of the travel speed (V) of the actuator member is less than or equal to a predetermined minimum travel speed threshold (V_min); and
• if an order for movement of the actuator member towards the second abutment is active, which order is representative of the travel direction of the actuator member.

3. A method according to claim 1, wherein blocking of the rotor due to the actuator member (2) reaching the first abutment is detected:
• if the position (X) of the actuator member is substantially less than or equal to the position of the first abutment; and
• if an absolute value of the difference between a travel speed setpoint (V*) for the actuator member and the travel speed (V) of the actuator member is greater than or equal to zero; and
• if the absolute value of the travel speed (V) of the actuator member is less than or equal to a predetermined minimum travel speed threshold (V_min); and
• if an order for movement of the actuator member towards the first abutment is active, which order is representative of the travel direction of the actuator member.

4. A method according to claim 1, wherein blocking of the rotor due to seizing during travel of the actuator member (2) towards the second abutment is detected:
• if the position (X) of the actuator member is substantially less than the position of the second abutment (But_2) and substantially greater than the position of the first abutment (But_1); and
• if an absolute value of the travel speed (V) of the actuator member is less than a predetermined minimum travel speed threshold (V_min); and
• if an absolute value of the difference between the predetermined maximum torque threshold (C_max) and a torque setpoint (C*) for transmitting to the actuator member is substantially zero for at least a predetermined time interval; and
• if an order to move the actuator member towards the second abutment is active, which order is representative of a travel direction of the actuator member.

5. A method according to claim 1, wherein blocking of the rotor due to seizing during travel of the actuator member (2) towards the first abutment is detected:
• if the position (X) of the actuator member is substantially less than the position of the second abutment and substantially greater than the position of the first abutment; and
• if an absolute value of the travel speed of the actuator member is less than a predetermined minimum travel speed threshold (V_min); and
• if an absolute value of the difference between the predetermined minimum torque threshold (C_min) and a torque setpoint (C*) for transmitting to the actuator member is substantially zero for at least a predetermined time interval, the predetermined minimum torque threshold being a negative value; and
• if an order to move the actuator member towards the first abutment is active, which order is representative of a travel direction of the actuator member.

6. A method according to claim 1, further including a step of releasing the rotor when it is detected that blocking is due to seizing.

7. A method according to claim 6, wherein during the step of releasing the rotor, the rotor is controlled to perform angular movements of small amplitude successively in one direction of rotation and then in the other direction of rotation of the rotor.

8. A method according to claim 6, wherein during the step of releasing the rotor, a maximum mechanical torque threshold (C_max) for transmitting to the actuator member (2) is increased during a predetermined time interval, respectively a minimal mechanical torque threshold (C max) for transmitting to the actuator member(2) is reduced during a predetermined time interval, predetermined minimal mechanical torque threshold being a negative value

9. A method according to claim 6, wherein during the step of releasing the rotor, the power supply to the motor (1) is cut off.

10. A method according to claim 1, further including a step of fictitious braking of the actuator member (2) when blocking is detected due to the actuator member coming into abutment.

11. A method according to claim 10, wherein the maximum mechanical torque threshold (C_max), of positive value, for transmitting to the actuator member (2) is reduced when it is detected that blocking is due to the actuator member coming into abutment.

12. A method according to claim 10, wherein the minimum mechanical torque threshold (C_min), of negative value, for transmitting to the actuator member (2) is increased when it is detected that blocking is due to the actuator member coming into abutment.
